# EUROPÄISCHE PATENTSCHRIFT

(11) **EP 0 832 939 B1**
(45) Veröffentlichungstag und Bekanntmachung des Hinweises auf die Patenterteilung: **27.12.2000**
(21) Anmeldenummer: 97116517.0
(22) Anmeldetag: 23.09.1997
(51) Int. Cl.: C09B 67/22, D06P 1/38

(54) **Blaufärbende Mischungen von faserreaktiven Farbstoffen und ihre Verwendung zum Färben von hydroxy- und/oder carbonamidgruppenhaltigem Fasermaterial**
Mixtures of reactive azo dyes dyeing in blue and their use for dyeing fibrous material containing hydroxy and/or carbonamide groups
Mélanges de colorants azoiques réactifs teignant en bleu et leur utilisation pour la teinture de fibres contenant des groupes hydroxy et/ou carbonamide

(30) Priorität: 30.09.1996 DE 19640203
(43) Veröffentlichungstag der Anmeldung: 01.04.1998
(73) Patentinhaber: DyStar Textilfarben GmbH & Co. Deutschland KG, 60318 Frankfurt am Main (DE)
(72) Erfinder: Russ, Werner Hubert, Dr., 65439 Flörsheim (DE); von der Eltz, Andreas, Dr., 60431 Frankfurt am Main (DE); Gröbel, Bengt-Thomas, Dr., 65529 Niederems (DE); Negri, Daniele, 21052 Busto Arsizio (IT)

(56) Entgegenhaltungen:
- EP-A- 0 668 328
- EP-A- 0 730 010
- EP-A- 0 735 112
- DATABASE WPI Week 9514 Derwent Publications Ltd., London, GB; AN 95-401180[14] XP002071711 "Reactive dye compositions" & JP 07 278 461 (MITSUBISHI KASEI HOECHST KK) & JP 07 278 461 A (MITSUBISHI KASEI HOECHST KK)

## Beschreibung

Die Erfindung liegt auf dem technischen Gebiet der faserreaktiven Farbstoffe.

Bei dem Bemühen, die Farbstoffgammen durch moderne Reaktivfarbstoffe zu erweitern oder zu ergänzen, stößt man in vielerlei Hinsicht an Grenzen, die durch eine einzelne Farbstoffkomponente nicht oder nur ungenügend gelöst werden können. Um bestimmte Farbnuancen zu erhalten, bedient man sich der Trichromiefärbung. Doch gibt es bei Einsatz von dunkelblauen Reaktivfarbstoffen oft Schwierigkeiten, da die Farbstoffe entweder zu affin zur Faser sind und zu schnell ausziehen oder beispielsweise bei Kupferkomplex-Formazanfarbstoffen keinen ausreichenden Flottenauszug besitzen. Zwar wurden mit der europäischen Patentanmeldungs-Veröffentlichung Nr. 0 730 010 und der japanischen Patentanmeldungs-Veröffentlichung Hei-7-278461 schon blaufärbende Farbstoffmischungen, die einen Kupferformazanfarbstoff enthalten, beschrieben, doch bestand weiterhin das Problem, geeignete blaufärbende Reaktivfarbstoffe, die ein ausgewogenes Verhalten in ihrer Affinität zur Faser und im Ausziehverhalten aufweisen, aufzufinden.

Mit der vorliegenden Erfindung wurden nunmehr Mischungen aus Farbstoffen entsprechend den nachstehend angegebenen und definierten allgemeinen Formeln (1), (2) und (3) gefunden, die diese Aufgabe lösen.

Die vorliegende Erfindung betrifft Farbstoffmischungen, die einen oder mehrere, wie zwei oder drei, Kupferformazanfarbstoffe der allgemeinen Formel (1), einen oder mehrere, wie zwei, drei oder vier, Disazofarbstoffe der allgemeinen Formel (2) und einen oder zwei Monoazofarbstoffe der allgemeinen Formel (3) enthalten.

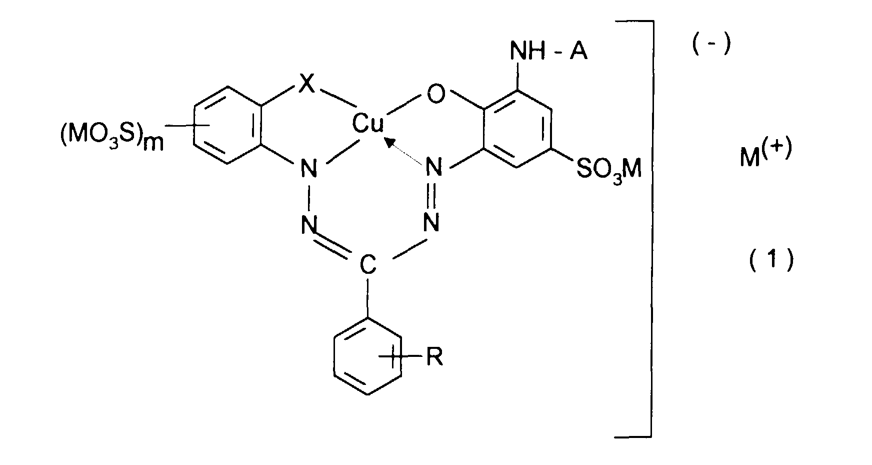

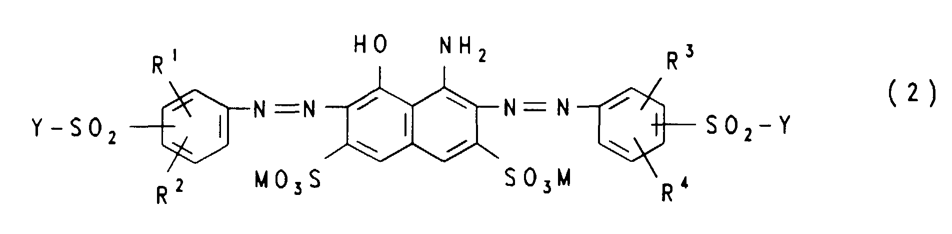

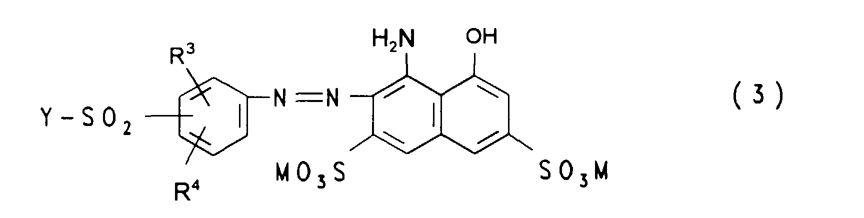

In diesen Formeln bedeuten:
- M: ist Wasserstoff oder ein Alkalimetall, wie Lithium, Natrium und Kalium;
- m: ist die Zahl Null oder 1 (wobei im Falle von m gleich Null diese Gruppe Wasserstoff bedeutet);
- Y: ist Vinyl, β-Chlorethyl, β-Thiosulfatoethyl oder β-Sulfatoethyl, bevorzugt Vinyl und insbesondere β-Sulfatoethyl;
- R: ist Wasserstoff, Alkyl von 1 bis 4 C-Atomen, wie Methyl oder Ethyl, Sulfo, Carboxy oder Chlor, bevorzugt Wasserstoff oder Sulfo;
- X: ist Carbonyloxy der Formel -CO-O- oder Oxy der Formel -O- oder die Gruppe -SO₃⁽⁻⁾, bevorzugt Carbonyloxy;
- A: ist ein Rest der allgemeinen Formel (a), (b) oder (c)

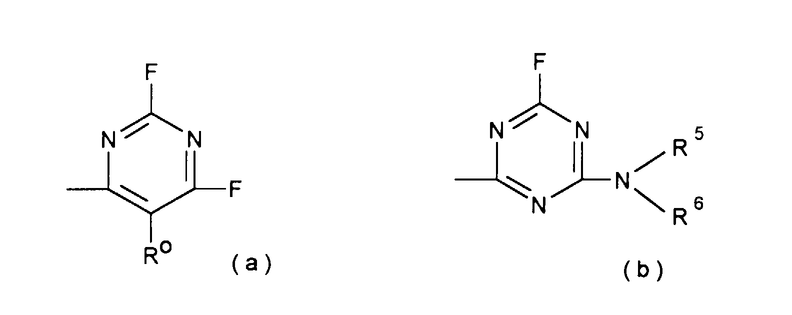

-CO-NH-R⁷ (c)

in welchen
R^{o} Wasserstoff oder Chlor ist,
R⁵ Wasserstoff oder bevorzugt Alkyl von 1 bis 4 C-Atomen, wie Methyl und Ethyl, oder insbesondere bevorzugt Phenyl ist, das substituiert sein kann, wie beispielsweise durch 1 oder 2 Substituenten aus der Gruppe Sulfo, Alkyl von 1 bis 4 C-Atomen, wie Ethyl und insbesondere Methyl, Alkoxy von 1 bis 4 C-Atomen, wie Ethoxy und insbesondere Methoxy, Carboxy und Halogen, wie Chlor, bevorzugt hiervon Sulfo,
R⁶ Wasserstoff, Alkyl von 1 bis 4 C-Atomen, wie Methyl, Ethyl und n-Propyl, oder bevorzugt eine Gruppe der allgemeinen Formel -(CH₂)ₙ-SO₂-Y ist, in welcher Y eine der oben angegebenen Bedeutungen besitzt und n die Zahl 2 oder 3 ist, oder weiterhin bevorzugt eine Gruppe der allgemeinen Formel -(CH₂)ₙ-phenylen-SO₂-Y mit Y und n der obengenannten Bedeutung ist oder weiterhin bevorzugt eine Gruppe der allgemeinen Formel -(CH₂)ₚ-B-(CH₂)_{q}-SO₂-Y ist, in welchen p und q, beide unabhängig voneinander, die Zahl 2, 3 oder 4, bevorzugt 2, bedeuten, B ein Rest der Formel -O- oder -NH- ist und Y eine der obengenannten Bedeutungen besitzt, und
R⁷ eine Gruppe der allgemeinen Formel -(CH₂)ₙ-SO₂-Y ist, in welcher Y eine der oben angegebenen Bedeutungen besitzt und n die Zahl 2 oder 3, bevorzugt 2, ist, oder eine Gruppe der allgemeinen Formel -(CH₂)ₙ-phenylen-SO₂-Y mit Y und n der obengenannten Bedeutung ist;
- R¹: ist Wasserstoff, Methyl, Ethyl, Methoxy oder Ethoxy, vorzugsweise Methoxy und Wasserstoff und insbesondere Wasserstoff;
- R²: ist Wasserstoff, Methyl, Ethyl, Methoxy oder Ethoxy, vorzugsweise Wasserstoff;
- R³: ist Wasserstoff, Methyl, Ethyl, Methoxy oder Ethoxy, vorzugsweise Methoxy und Wasserstoff und insbesondere Wasserstoff;
- R⁴: ist Wasserstoff, Methyl, Ethyl, Methoxy oder Ethoxy, vorzugsweise Wasserstoff.

Die einzelnen Formelglieder in den Formeln (1), (2) und (3) können im Rahmen ihrer Definition zueinander auch gleiche Bedeutung besitzen.

Eine Sulfogruppe ist eine Gruppe der allgemeinen Formel -SO₃M, eine Carboxygruppe eine Gruppe der allgemeinen Formel -COOM , eine Sulfatogruppe eine Gruppe der allgemeinen Formel -OSO₃M und eine Thiosulfatogruppe eine Gruppe der allgemeinen Formel -S-SO₃M , jeweils mit M der obenangegebenen Bedeutung.

Die Farbstoffe der allgemeinen Formeln (1), (2) und (3) sind beispielsweise aus den deutschen Patentschriften Nrs. 960 534 und 965 902, den U.S.-Patentschriften Nrs. 4 257 770, 4 515 598, 4 649 193 und 5 278 292, den europäischen Patentanmeldungs-Veröffentlichungen Nrs. 0 135 040 und 0 527 164 sowie der Deutschen Offenlegungsschrift Nr. 1 904 112 bekannt oder können analog den dort beschriebenen Verfahrensweisen hergestellt werden.

In Formeln (2) und (3) stehen die Gruppen Y-SO₂- bevorzugt in meta- oder para-Stellung zu den Azogruppen an den Benzolrest gebunden. In Formel (1) steht die eine Gruppe MO₃S- bevorzugt in den para-Stellungen zur Gruppe X bzw. zum N-Atom des Formazanheterocyclus.

Im allgemeinen liegen die Farbstoffe der allgemeinen Formeln (1), (2) und (3) in der erfindungsgemäßen Mischung in einem molaren Mischungsverhältnis von 20 : 100 : 0,5 bis 70 : 40 : 4, bevorzugt in einem molaren Mischungsverhältnis von 35 : 80 : 2 bis 55 : 55,5 : 1, vor.

Reste von Diazokomponenten der allgemeinen Formeln (2) und (3) sind beispielsweise 3-(β-Sulfatoethylsulfonyl)-phenyl, 4-(β-Sulfatoethylsulfonyl)-phenyl, 2-Methyl-5-methoxy-4-(β-sulfatoethylsulfonyl)-phenyl, 2-Methoxy-5-(β-sulfatoethylsulfonyl)-phenyl und 2,5-Dimethoxy-4-(β-sulfatoethylsulfonyl)-phenyl sowie deren Vinylsulfonyl-, β-Chlorethylsulfonyl- und β-Thiosulfatoethylsulfonyl-Derivate, bevorzugt 2-Methoxy-5-(β-sulfatoethylsulfonyl)-phenyl und 2,5-Dimethoxy-4-(β-sulfatoethylsulfonyl)-phenyl und insbesondere 3-(β-Sulfatoethylsulfonyl)-phenyl und 4-(β-Sulfatoethylsulfonyl)-phenyl.

Die Farbstoffe der Formeln (1), (2) und (3) können, insbesondere bei gleichem Chromophor, innerhalb der Bedeutung von Y unterschiedliche faserreaktive Gruppen -SO₂-Y besitzen. Insbesondere können die Farbstoffmischungen Farbstoffe gleichen Chromophors enthalten, in denen die faserreaktiven Gruppen -SO₂-Y zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind. Ist in den Farbstoffmischungen solch eine Farbstoffkomponente in Form eines Vinylsulfonyl-Farbstoffes vorhanden, so liegt der Anteil des jeweiligen Vinylsulfonyl-Farbstoffes zu dem jeweiligen β-Chlor- oder β-Thiosulfato- oder β-Sulfatoethylsulfonyl-Farbstoff bevorzugt bei bis zu etwa 20 Mol-%, bezogen auf den jeweiligen Farbstoffchromophor, vor. Hierbei sind solche Farbstoffmischungen bevorzugt, bei welchen der Anteil an den Vinylsulfonyl-Farbstoffen zu den β-Sulfatoethylsulfonyl-Farbstoffen im Molverhältnis zwischen 2:98 und 10:90 liegt.

Die erfindungsgemäßen Farbstoffmischungen können als Präparation in fester oder in flüssiger (gelöster) Form vorliegen. Sie enthalten im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, bei Vorliegen in fester Form geringe Mengen an Sikkativen oder die Löslichkeit verbessernden Mitteln, wie die bekannten Naphthalinsulfonsäure-Formaldehyd-Kondensationsprodukte, und in flüssiger Form, wie in wäßriger Lösung (einschließlich des Gehaltes von Verdickungsmitteln, wie sie bei Druckpasten üblich sind), Substanzen, die die Haltbarkeit dieser Präparationen gewährleisten, wie beispielsweise schimmelverhütende Mittel.

Im allgemeinen liegen die erfindungsgemäßen Farbstoffmischungen als elektrolytsalzhaltige Farbstoffpulver mit einem Gesamtfarbstoffgehalt von 20 bis 70 Gew.-%, bezogen auf das Farbstoffpulver bzw. die Präparation, vor. Diese Farbstoffpulver/Präparationen können zudem die erwähnten Puffersubstanzen in einer Gesamtmenge von bis zu 5 Gew.-%, bezogen auf das Farbstoffpulver, enthalten. Sofern die erfindungsgemäßen Farbstoffmischungen in wäßriger Lösung vorliegen, beträgt der Gesamtfarbstoffgehalt in diesen wäßrigen Lösungen bis zu etwa 50 Gew.-%, wie beispielsweise zwischen 5 und 40 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können in üblicher Weise hergestellt werden, so durch mechanisches Mischen der Farbstoffe bzw. Farbstoffpulver oder deren wäßrigen Lösungen. Werden die erfindungsgemäßen Farbstoffmischungen durch mechanisches Mischen der Farbstoffe hergestellt, so werden beim Mischen eventuell erforderliche Stellmittel, Entstaubungsmittel oder weitere Hilfsmittel, die in der Färbereitechnik üblich und in den hierzu verwendeten Farbstoffpräparationen üblich sind, zugegeben.

Geht man von wäßrigen Farbstofflösungen der Einzelkomponenten (Einzelfarbstoffe) aus, so gelangt man ebenfalls durch einfaches Vermischen unter Berücksichtigung der Mengen der Farbstofflösungen und deren Farbstoffkonzentrationen zu der gewünschten Farbstoffmischung in wäßriger Form (Flüssigpräparation). Solche wäßrigen Farbstofflösungen der Einzelkomponenten können auch Syntheselösungen sein, die aus der Synthese der Einzelkomponenten erhältlich sind. Die so durch Mischung der einzelnen Farbstofflösungen (Syntheselösungen) erhaltenen wäßrigen Lösungen mit den erfindungsgemäßen Farbstoffmischungen können dann direkt, gegebenenfalls nach Filtration, Aufkonzentrieren und/oder Zusatz eines Puffers oder anderer Hilfsstoffe, als Flüssigpräparation der färberischen Verwendung zugeführt werden. Aus ihnen lassen sich aber auch die erfindungsgemäßen pulver- oder granulatförmigen Farbstoffmischungen der gewünschten Zusammensetzung und Einstellung, beispielsweise durch Sprühtrocknung und erforderlichenfalls in einem Wirbelbett, gewinnen.

Die erfindungsgemäßen Farbstoffmischungen bzw. die Farbstoffe der allgemeinen Formeln (1), (2) und (3) gemeinsam liefern nach den in der Technik für faserreaktive Farbstoffe zahlreich beschriebenen Anwendungs- und Fixierverfahren auf hydroxy- und/oder carbonamidgruppenhaltigen Fasermaterialien blaue Färbungen mit gutem Farbaufbau und insbesondere guter Auswaschbarkeit nicht fixierter Farbstoffanteile aus den gefärbten Materialien. Gegenüber den Einzelfarbstoffen zeigt die Farbstoffmischung ein homogenes Auszieh- und Fixierverhalten und liefern sowohl zu Anfang des Färbeprozesses als auch zum Ende des Färbeprozesses blaue Färbungen mit konstanter Farbnuance, was insbesondere in einem kontinuierlichen Färbeprozeß von hoher Wichtigkeit ist. Die Farbstoffmischung läßt sich deshalb auch problemlos in die Trichromiefärbung einfügen.

Gegenstand der vorliegenden Erfindung ist somit auch die Verwendung der erfindungsgemäßen Farbstoffmischungen bzw. der Farbstoffe der Formeln (1), (2) und (3) gemeinsam zum Färben (einschließlich Bedrucken und einschließlich in der Trichromiefärbung) von hydroxy- und/oder carbonamidgruppenhaltigen Fasermaterialien bzw. Verfahren zum Färben solcher Fasermaterialien unter Verwendung einer erfindungsgemäßen Farbstoffmischung bzw. der Farbstoffe der Formeln (1), (2) und (3) gemeinsam, indem man die Farbstoffmischung bzw. diese Farbstoffe in gelöster Form auf das Substrat appliziert und die Farbstoffe durch Einwirkung eines alkalisch wirkenden Agens oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen auch mit Vorteil in den Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Ebenfalls erhält man nach den üblichen Druckverfahren für Cellulosefasern - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe der erfindungsgemäßen Farbstoffmischungen mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung und limitieren nicht die weiteren Möglichkeiten. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

Sofern in den Beispielen die Formeln der Farbstoffe in Form der freien Säure angegeben sind, beziehen sich die Mengenteile auf die saure Form. In der Regel werden die Farbstoffe jedoch in der für wasserlösliche Farbstoffe üblich vorliegenden Form als elektrolytsalzhaltiges (beispielsweise natriumchlorid- und natriumsulfathaltiges) Alkalimetallsalz-Pulver eingesetzt.

### Beispiel 1

100 Teile einer wäßrigen Lösung mit 43 Teilen (53 mMol) des Farbstoffes der Formel (A) 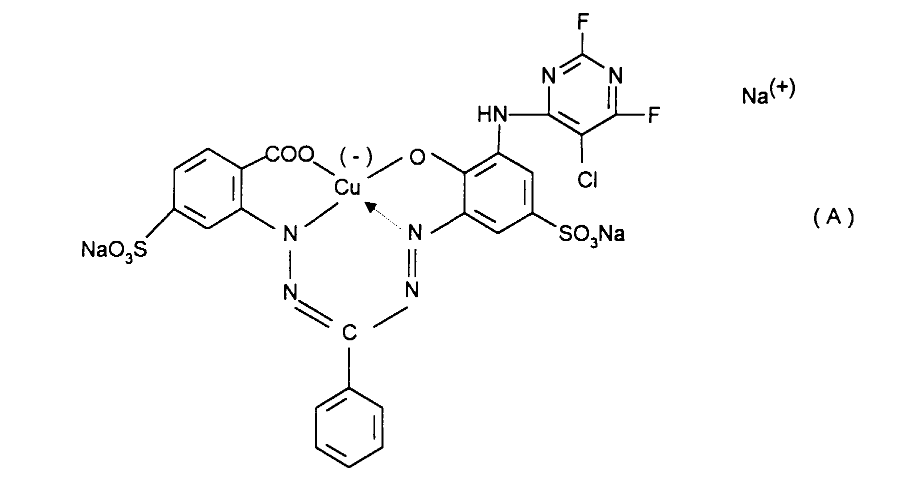 die aus der Synthese dieses Farbstoffes nach Filtration erhalten wird, werden in einem Gefäß mit 30 Teilen Wasser verdünnt. Anschließend werden kontinuierlich eine Mischung aus 70 Teilen (71 mMol) des Farbstoffes der Formel (B) und 1 Teil (1,48 mMol) des Farbstoffes der Formel (C) 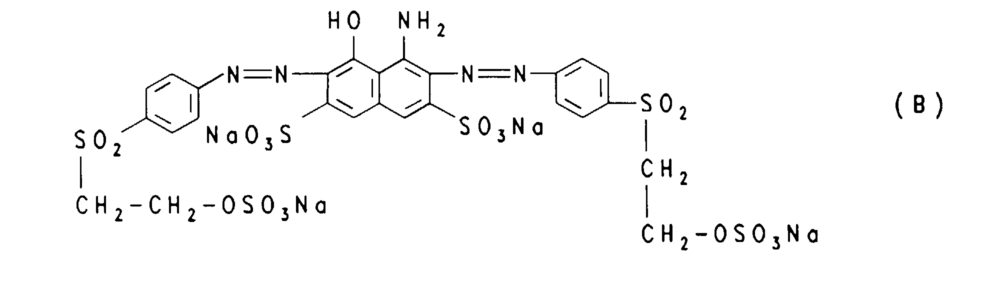 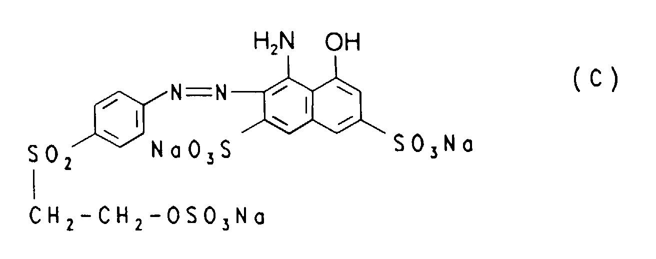 in Form des elektrolythaltigen Pulvers in diese Lösung eingerührt. Die erhaltene erfindungsgemäße wäßrige Farbstoffmischung kann, gegebenenfalls nach Zusatz von üblichen Hilfsmitteln, wie beispielsweise von Puffersubstanzen oder synthetischen Stoffen, direkt der färberischen Verwendung zugeführt oder durch Sprühtrocknung und gegebenenfalls Granulierung in die feste Form übergeführt werden. Die erfindungsgemäße Farbstoffmischung zeigt bei hohem Echtheitsniveau ein ausgewogenes Auszieh- und Fixierprofil beim Färben von in der Beschreibung genannten Fasermaterialien, wie insbesondere Cellulosefasermaterialien, wie Baumwolle, nach den in der Technik für faserreaktive Farbstoffe üblichen Anwendungsverfahren. Es werden blaue Färbungen mit guter Qualität erhalten.

### Beispiel 2

160 Teile einer wäßrigen Lösung, wie bspw. einer aus der Synthese erhältlichen wäßrigen Lösung, mit 88 Teilen des Disazofarbstoffes der Formel (B) und 2 Teilen des Monoazofarbstoffes der Formel (C) werden mit 120 Teilen einer wäßrigen Lösung, wie bspw. einer aus der Synthese erhältlichen wäßrigen Lösung, mit 43 Teilen des Kupferformazanfarbstoffes der Formel (A) unter Rühren vermischt (wobei diese Lösungen noch Elektrolytsalze, wie Natriumchlorid, enthalten oder übliche Hilfsmittel, wie beispielsweise Puffer und tensidische Stoffe, enthalten können).

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Sie liefert nach den in der Technik für faserreaktive Farbstoffe üblichen Applikations- und Fixierverfahren bspw. auf Cellulosefasermaterialien farbstarke, egale blaue Färbungen und Drucke mit guten Echtheitseigenschaften. Die Mischung zeigt sich durch ein gutes Auszieh- und Fixierprofil aus und liefert auch in einem kontinuierlichen Färbeprozeß blaue Färbungen von gleichbleibender Nuance.

### Beispiel 3

86 Teile eines elektrolytsalzhaltigen (vorwiegend natriumchloridhaltigen) Farbstoffpulvers des Farbstoffes der Formel (A) mit einem Farbstoffgehalt von 50 % und 200 Teile eines elektrolytsalzhaltigen Pulvers der Farbstoffe der Formeln (B) und (C) mit einem Farbstoffgehalt des Farbstoffes (B) von 47 % und des Farbstoffes (C) von 3 % werden miteinander mechanisch vermischt, wobei gegebenenfalls dem Farbstoffpulver noch 0,5 bis 2 % eines Puffers, wie beispielsweise Natriumacetat oder Natriumdihydrogenphosphat/Dinatriumhydrogenphosphat, zugesetzt werden kann.

Die erhaltene erfindungsgemäße Farbstoffmischung liefert nach den in der Technik für faserreaktive Farbstoffe üblichen Anwendungsverfahren, wie bspw. in einem Ausziehverfahren, farbstarke, blaue Färbungen und Drucke von hoher Egalität, deren Nuance unabhängig von der Färbedauer ist.

### Beispiele 4 bis 71

In den nachfolgenden Tabellenbeispielen sind weitere erfindungsgemäße Farbstoffmischungen mit Farbstoffen der allgemeinen Formeln (A-1), (B-1) und (C-1) anhand ihrer Komponenten und Mischungsverhältnisse beschrieben. Sie lassen sich in üblicher Weise durch Vermischen der Farbstoffe, wie bspw. nach einem der in den Beispielen 1 bis 3 beschriebenen Varianten, herstellen. Die erfindungsgemäßen Farbstoffmischungen liefern nach den in der Technik für faserreaktive Farbstoffe üblichen Färbeverfahren blaue Färbungen von guter Egalität.

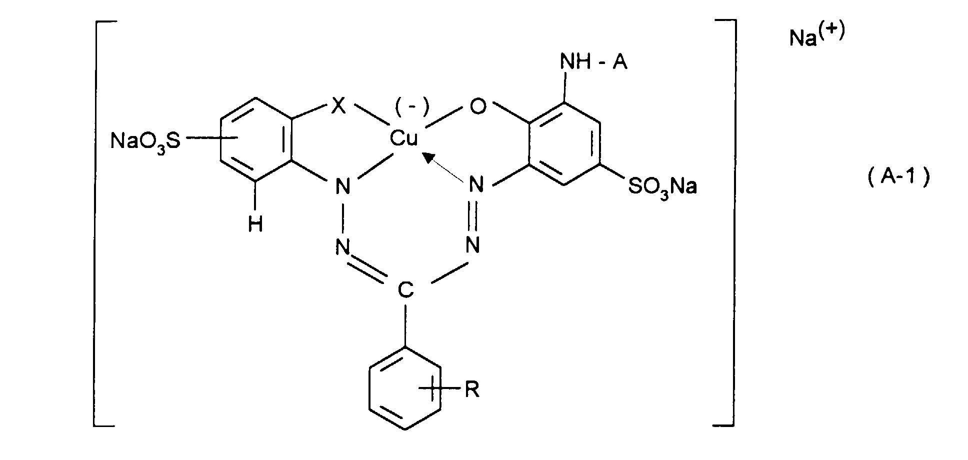

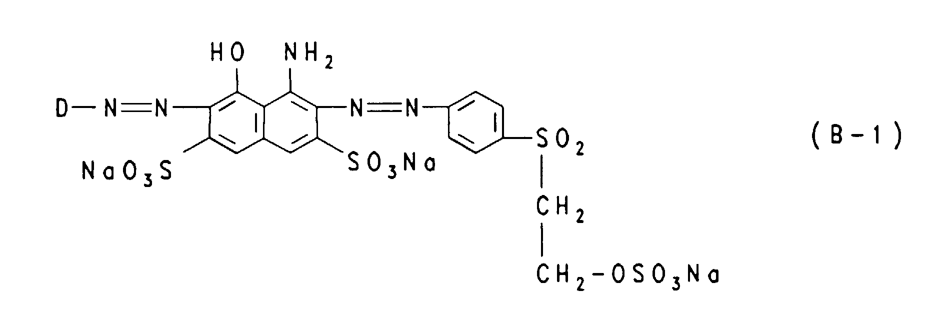

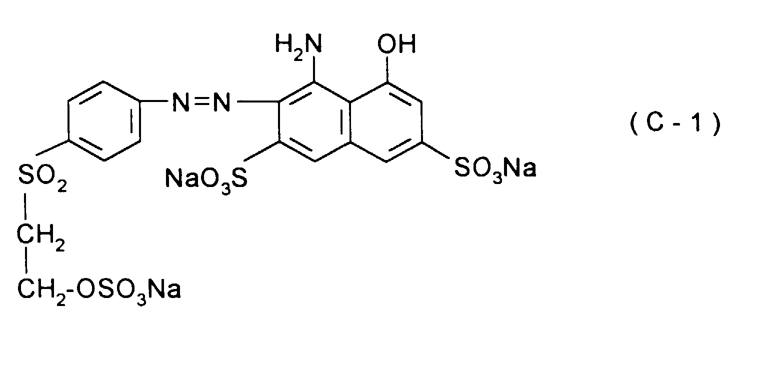

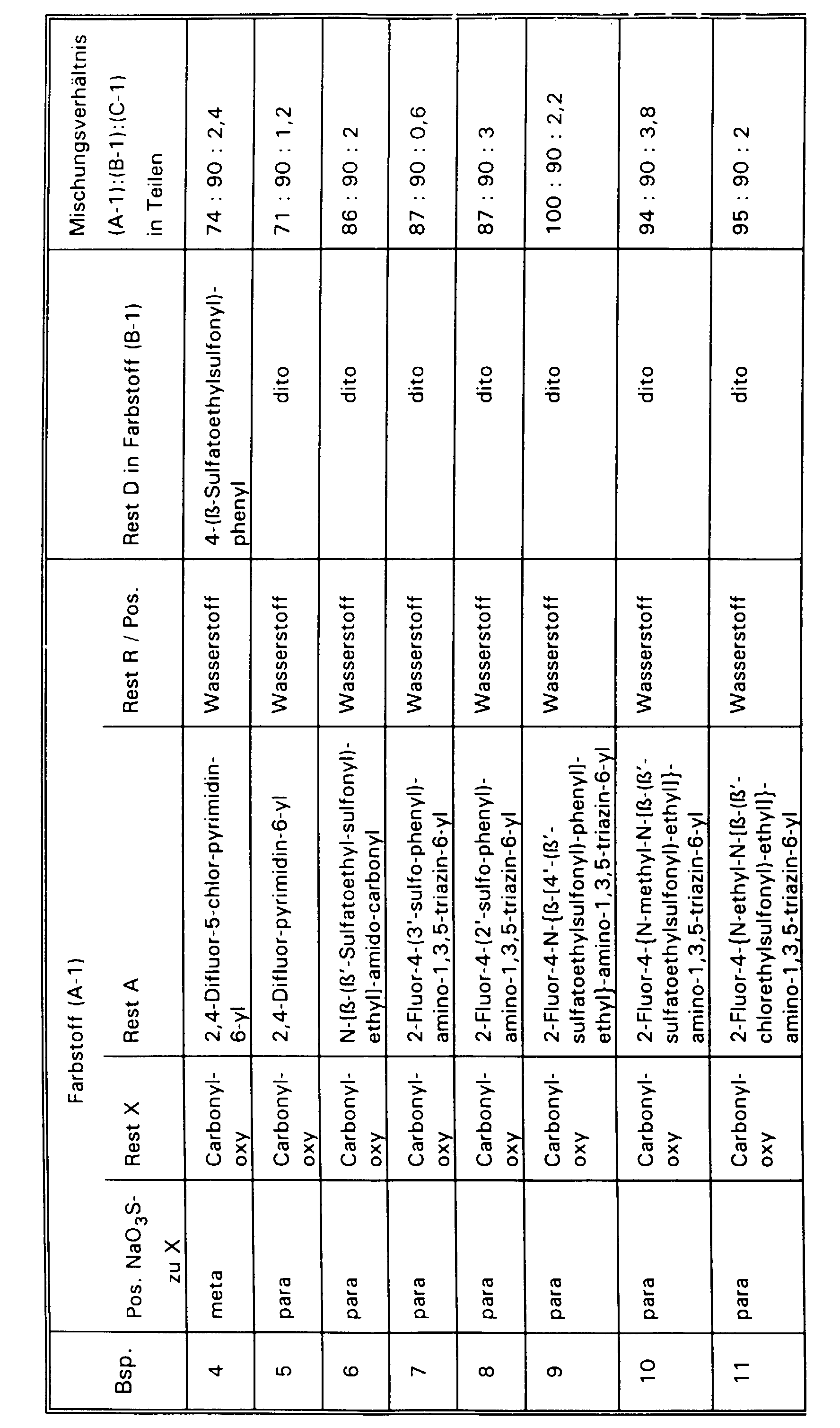

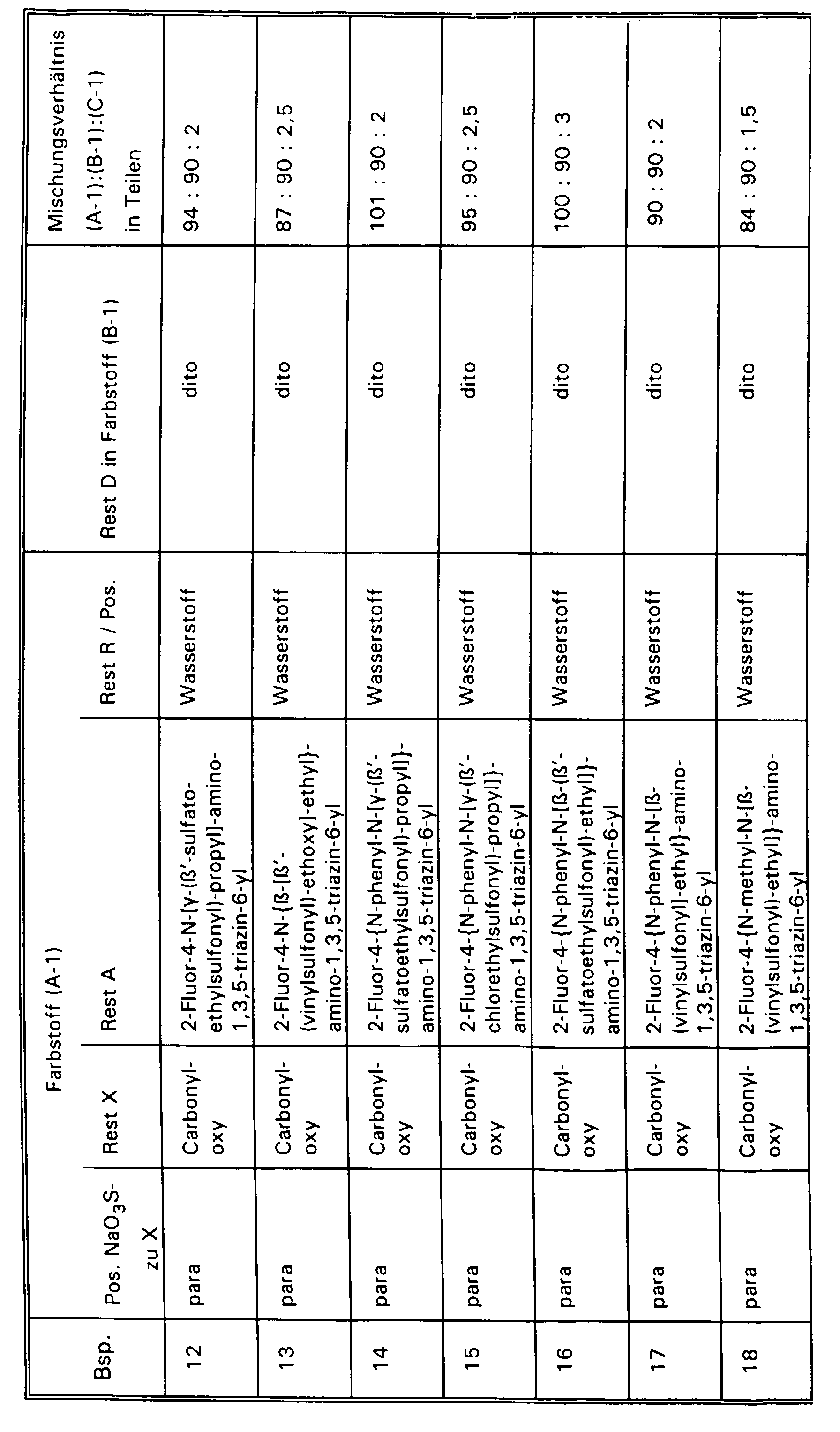

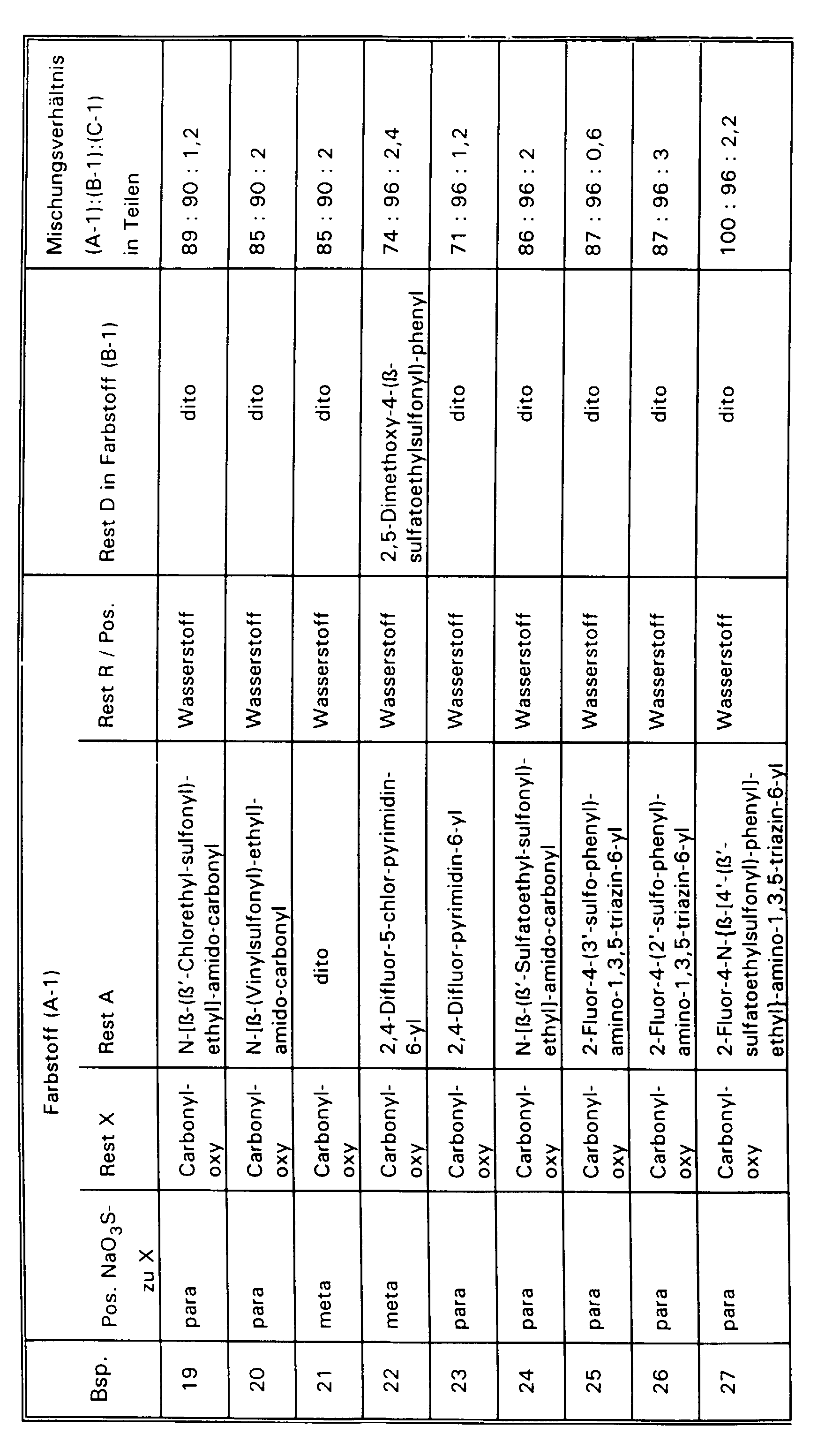

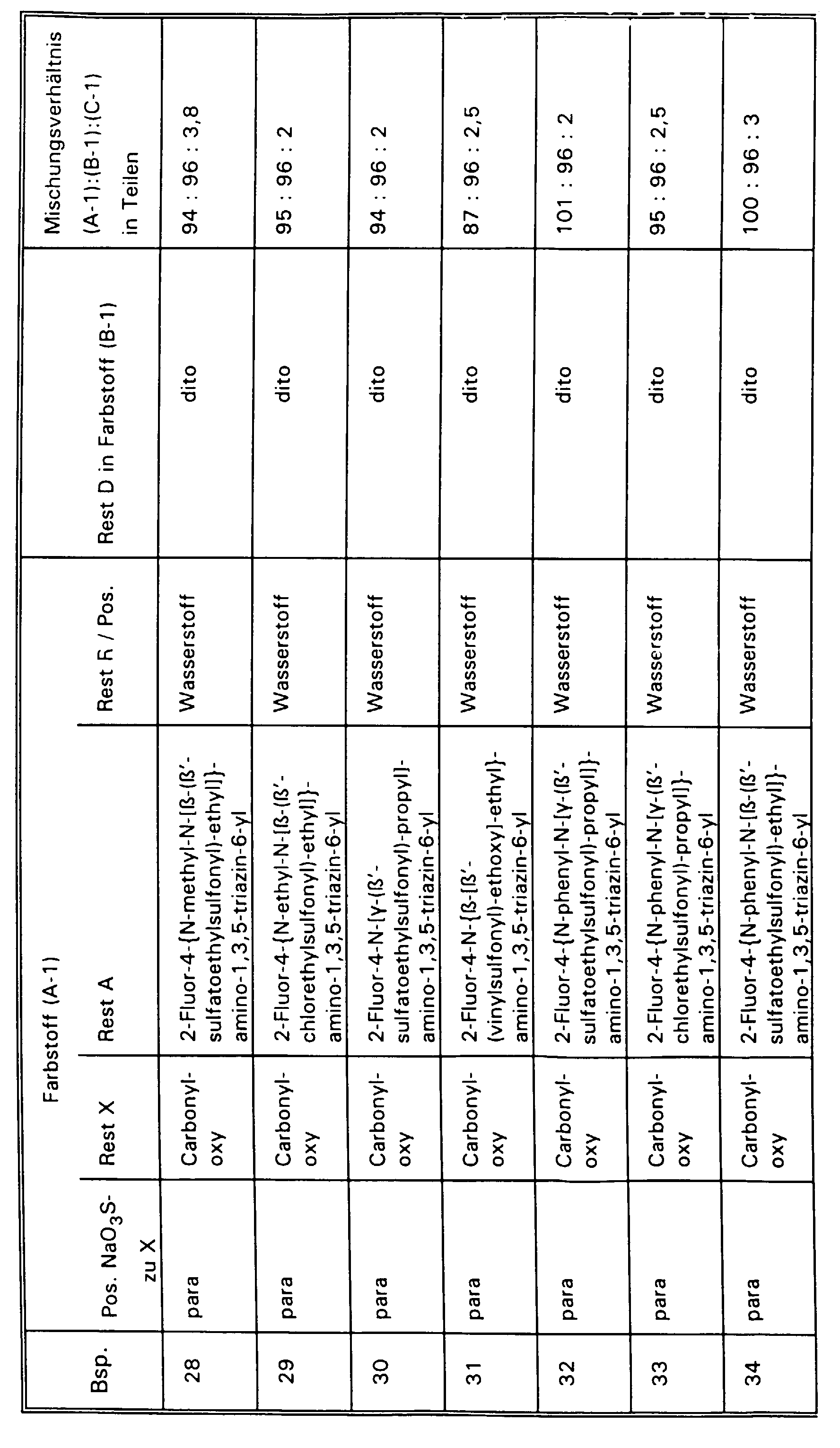

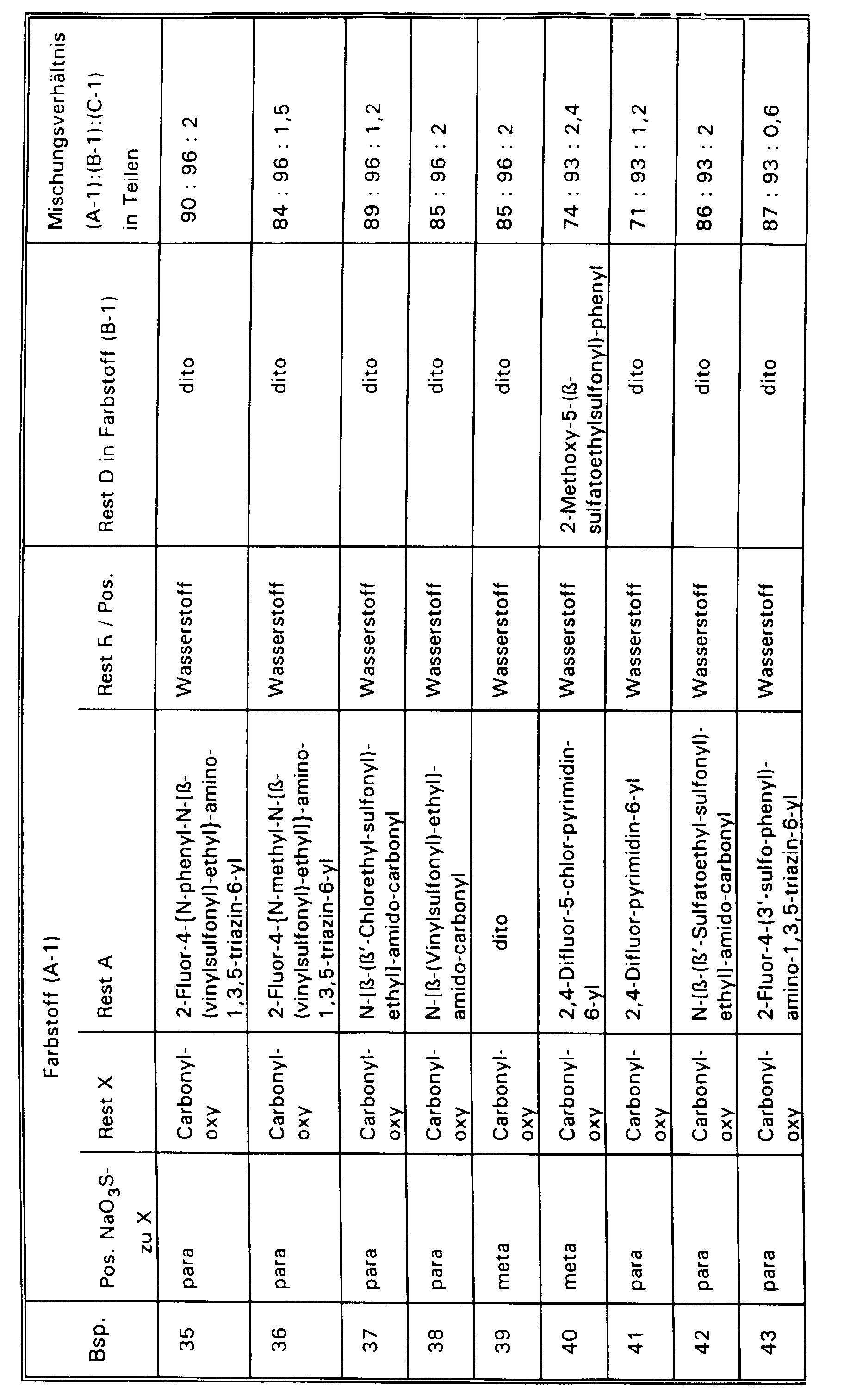

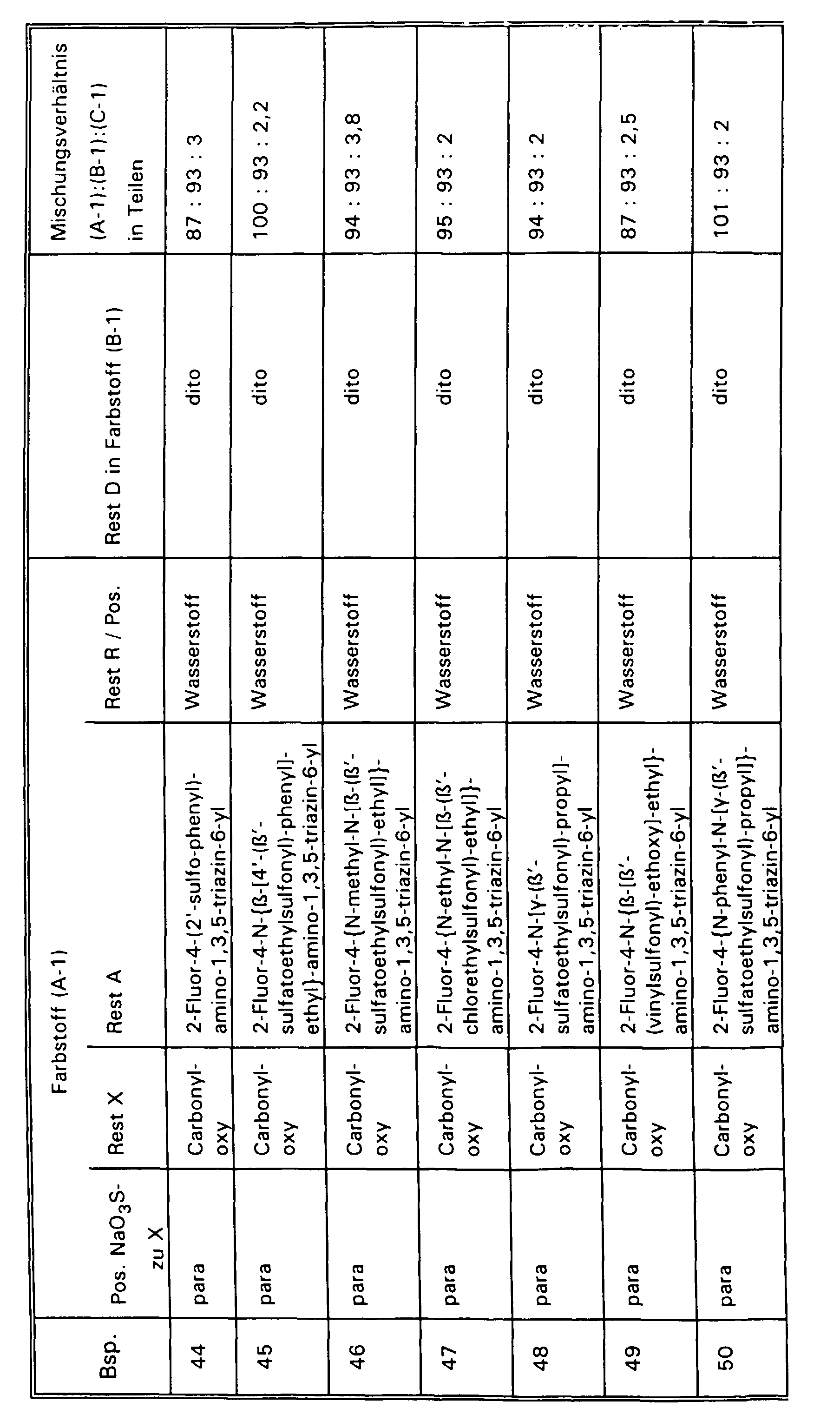

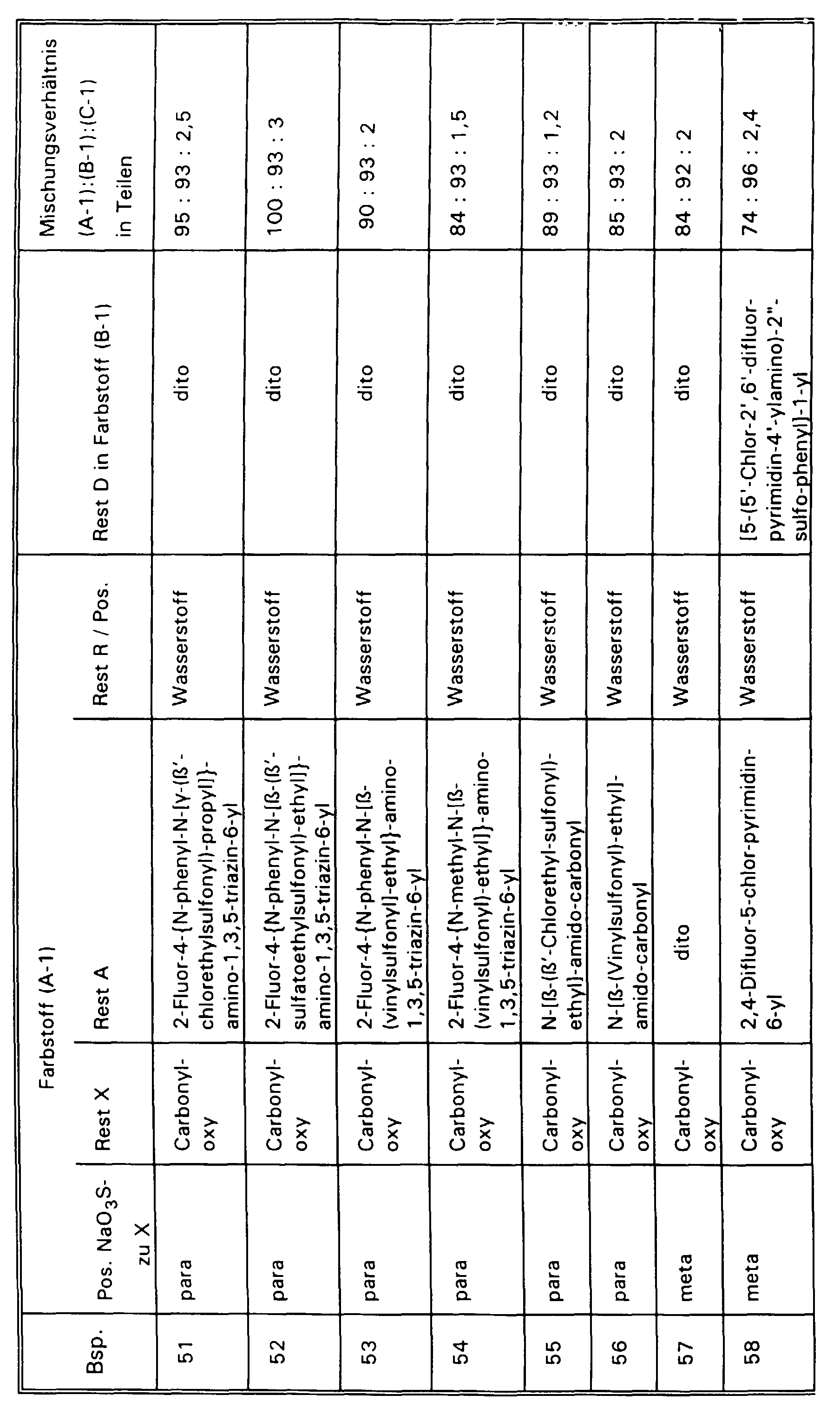

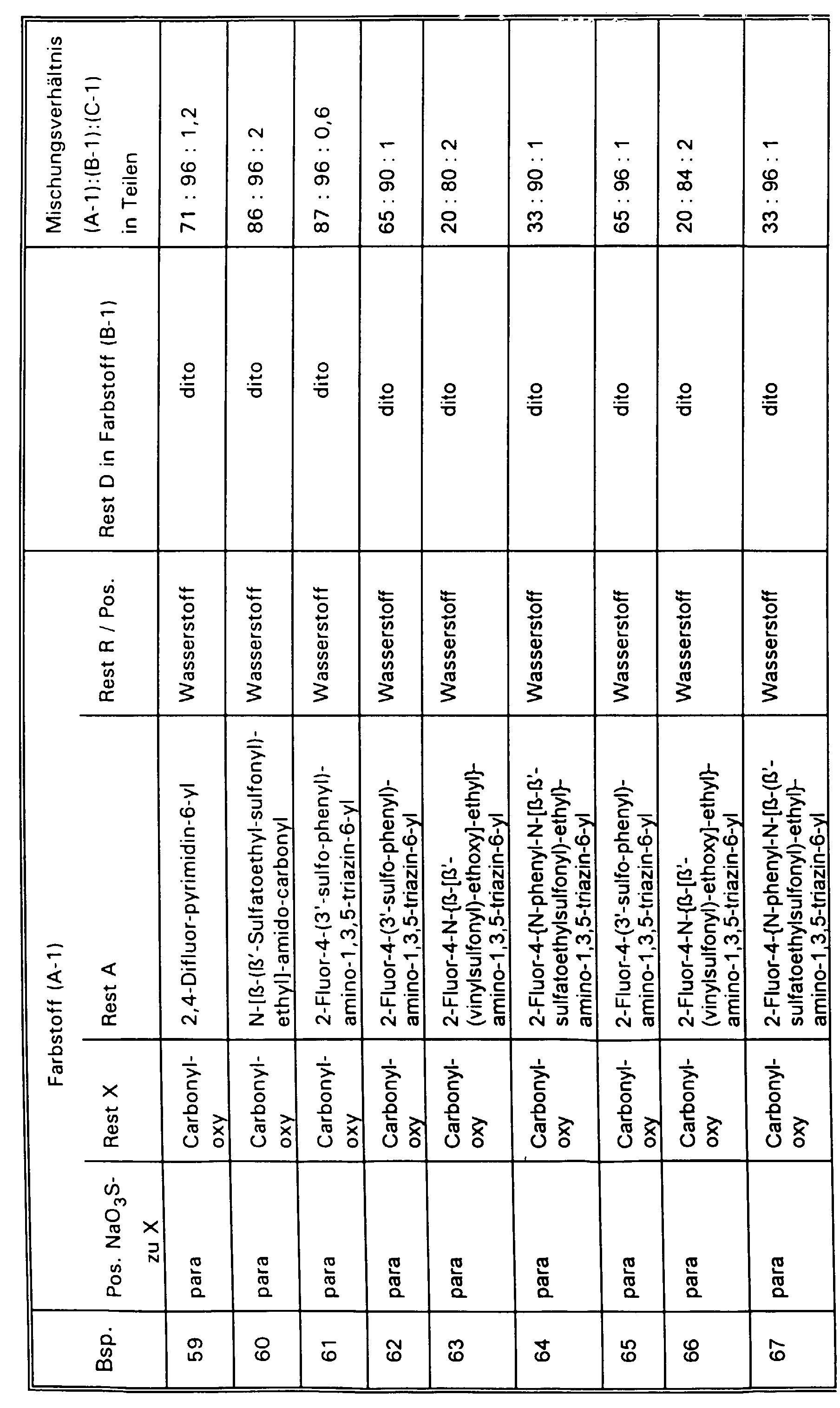

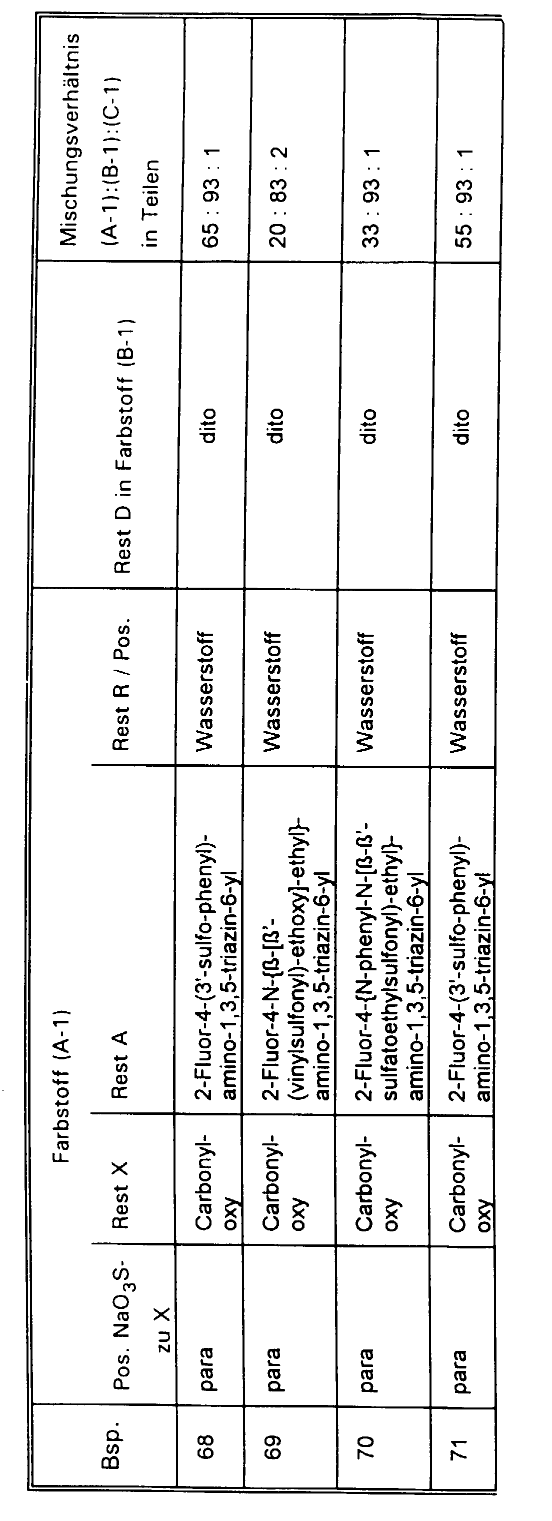

## Patentansprüche

1. Farbstoffmischung, enthaltend einen oder mehrere Kupferformazanfarbstoffe der allgemeinen Formel (1), einen oder mehrere Disazofarbstoffe der allgemeinen Formel (2) und einen oder zwei Monoazofarbstoffe der Formel (3) 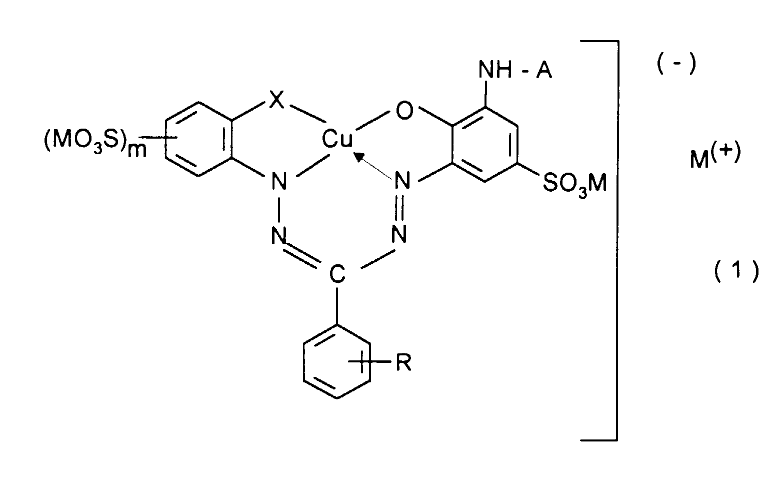 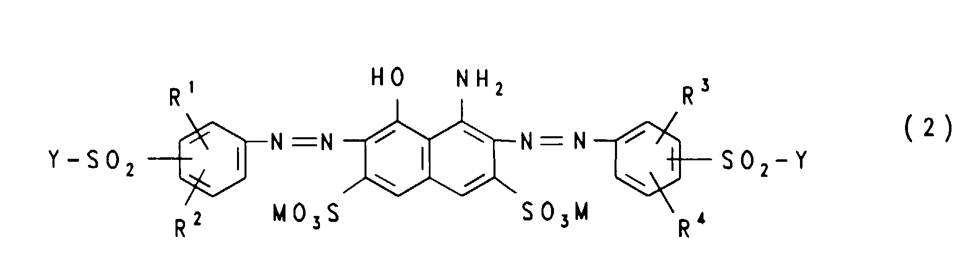 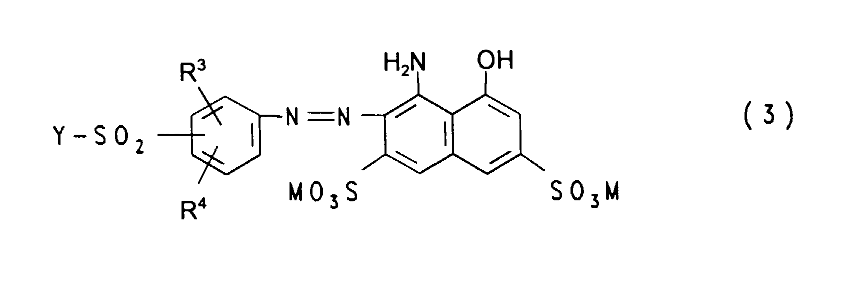 in welchen bedeuten:
M ist Wasserstoff oder ein Alkalimetall;
m ist die Zahl Null oder 1;
Y ist Vinyl, β-Chlorethyl, β-Thiosulfatoethyl oder β-Sulfatoethyl;
R ist Wasserstoff, Alkyl von 1 bis 4 C-Atomen, Sulfo, Carboxy oder Chlor;
X ist Carbonyloxy der Formel -CO-O- oder Oxy der Formel -O- oder die Gruppe -SO₃⁽⁻⁾ ;
A ist ein Rest der allgemeinen Formel (a), (b) oder (c) 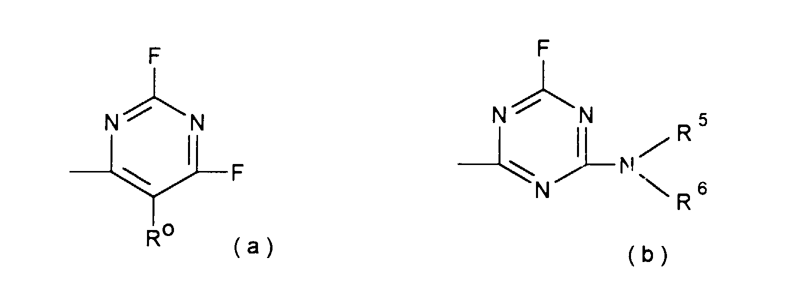
-CO-NH-R⁷ (c)
in welchen
R^{o} Wasserstoff oder Chlor ist,
R⁵ Wasserstoff, Alkyl von 1 bis 4 C-Atomen oder Phenyl ist, das substituiert sein kann,
R⁶ Wasserstoff, Alkyl von 1 bis 4 C-Atomen oder eine Gruppe der allgemeinen Formel -(CH₂)ₙ-SO₂-Y ist, in welcher Y eine der oben angegebenen Bedeutungen besitzt und n die Zahl 2 oder 3 ist, oder eine Gruppe der allgemeinen Formel -(CH₂)ₙ-phenylen-SO₂-Y mit Y und n der obengenannten Bedeutung ist oder eine Gruppe der allgemeinen Formel -(CH₂)ₚ-B-(CH₂)_{q}-SO₂-Y ist, in welchen p und q, beide unabhängig voneinander, die Zahl 2, 3 oder 4 bedeuten, B ein Rest der Formel -O- oder -NH- ist und Y eine der obengenannten Bedeutungen besitzt, und
R⁷ eine Gruppe der allgemeinen Formel -(CH₂)ₙ-SO₂-Y ist, in welcher Y eine der oben angegebenen Bedeutungen besitzt und n die Zahl 2 oder 3 ist, oder eine Gruppe der allgemeinen Formel -(CH₂)ₙ-phenylen-SO₂-Y mit Y und n der obengenannten Bedeutung ist;
R¹ ist Wasserstoff, Methyl, Ethyl, Methoxy oder Ethoxy;
R² ist Wasserstoff, Methyl, Ethyl, Methoxy oder Ethoxy;
R³ ist Wasserstoff, Methyl, Ethyl, Methoxy oder Ethoxy;
R⁴ ist Wasserstoff, Methyl, Ethyl, Methoxy oder Ethoxy.

2. Farbstoffmischung nach Anspruch 1, dadurch gekennzeichnet, daß R¹ und R³ unabhängig voneinander jedes Methoxy oder Wasserstoff ist und R² und R⁴ jedes Wasserstoff bedeuten.

3. Farbstoffmischung nach Anspruch 1, dadurch gekennzeichnet, daß R¹, R², R³ und R⁴ jedes Wasserstoff bedeuten.

4. Farbstoffmischung nach mindestens einem der Ansprüche 1 bis 3, dadurch gekennzeichnet, daß A ein Rest der allgemeinen Formel (b) 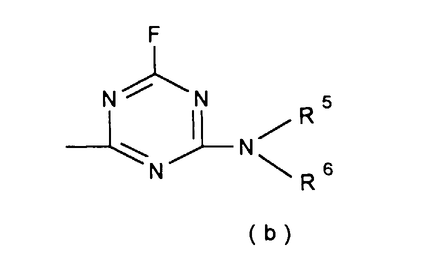 ist, in welcher R⁵ Phenyl ist, das durch 1 oder 2 Substituenten aus der Gruppe Sulfo, Alkyl von 1 bis 4 C-Atomen, Alkoxy von 1 bis 4 C-Atomen, Carboxy und Halogen substituiert sein kann und R⁶ eine der in Anspruch 1 angegebenen Bedeutungen besitzt.

5. Farbstoffmischung nach mindestens einem der Ansprüche 1 bis 4, dadurch gekennzeichnet, daß R Wasserstoff, Alkyl von 1 bis 4 C-Atomen, Sulfo, Carboxy oder Chlor ist und A ein in Anspruch 1 angegebener und definierter Rest der allgemeinen Formel (c) ist.

6. Farbstoffmischung nach mindestens einem der Ansprüche 1 bis 5, dadurch gekennzeichnet, daß die Farbstoffe der allgemeinen Formeln (1), (2) und (3) in der Mischung in einem molaren Mischungsverhältnis von 20 : 100 : 0,5 bis 70 : 40 : 4 vorliegen.

7. Farbstoffmischung nach mindestens einem der Ansprüche 1 bis 5, dadurch gekennzeichnet, daß die Farbstoffe der allgemeinen Formeln (1), (2) und (3) in der Mischung in einem molaren Mischungsverhältnis von 35 : 80 : 2 bis 55 : 55 : 1 vorliegen.

8. Farbstoffmischung nach mindestens einem der Ansprüche 1 bis 7, dadurch gekennzeichnet, daß Y jedes unabhängig voneinander Vinyl oder β-Sulfatoethyl ist.

9. Verfahren zur Herstellung einer Farbstoffmischung gemäß Anspruch 1, dadurch gekennzeichnet, daß man die Farbstoffe der allgemeinen Formeln (1), (2) und (3) in Form von deren Farbstoffpulvern und/oder wäßrigen Lösungen miteinander vermischt.

10. Verwendung einer Farbstoffmischung von mindestens einem der Ansprüche 1 bis 8 oder der Farbstoffe (1), (2) und (3) von Anspruch 1 gemeinsam zum Färben von hydroxy- und/oder carbonamidgruppenhaltigem Fasermaterial.

11. Verfahren zum Färben von hydroxy- und/oder carbonamidgruppenhaltigem Fasermaterial, bei welchem man Farbstoffe in gelöster Form auf das Material aufbringt und diese auf dem Material mittels Wärme oder mit Hilfe eines alkalisch wirkenden Mittels oder mit Hilfe beider Maßnahmen fixiert, dadurch gekennzeichnet, daß man als Farbstoffe eine Farbstoffmischung von mindestens einem der Ansprüche 1 bis 8 oder Farbstoffe (1), (2) und (3) von Anspruch 1 gemeinsam einsetzt.

## Claims

1. A dyestuff mixture comprising one or more copper formazan dyestuffs of the formula (1), one or more disazo dyestuffs of the formula (2) and one or two monoazo dyestuffs of the formula (3) 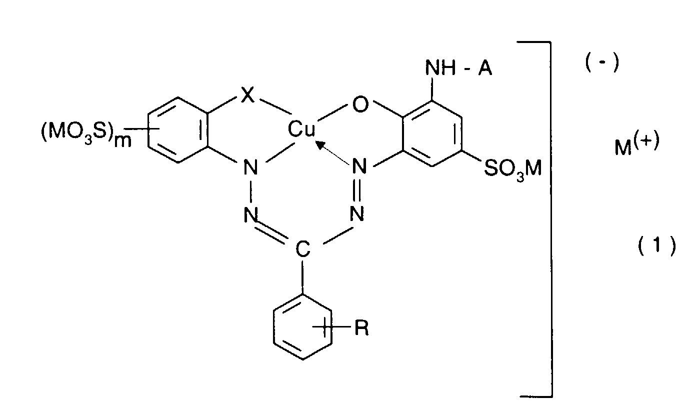 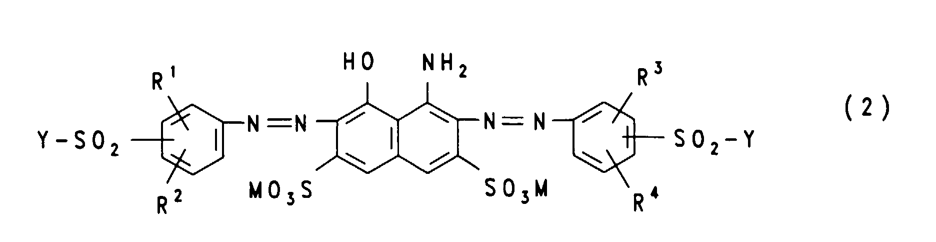 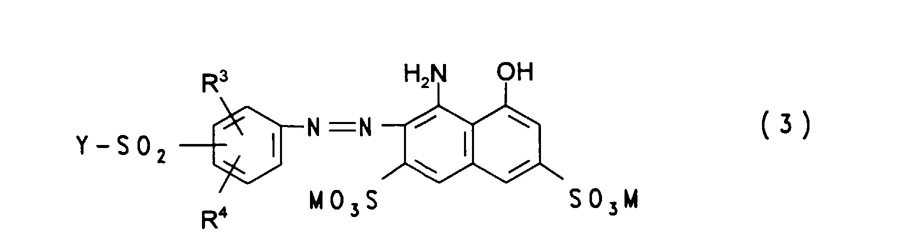 in which:
M is hydrogen or an alkali metal;
m is the number zero or 1;
Y is vinyl, β-chloroethyl, β-thiosulfatoethyl or β-sulfatoethyl;
R is hydrogen, alkyl having 1 to 4 carbon atoms, sulfo, carboxyl or chlorine;
X is carbonyloxy of the formula -CO-O- or oxy of the formula -O- or the group -SO₃⁽⁻⁾;
A is a radical of the formula (a), (b) or (c) 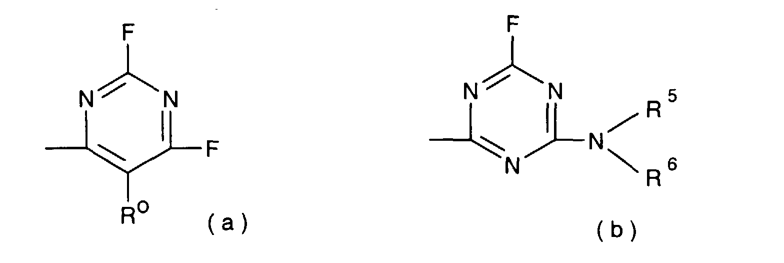
-CO-NH-R⁷ (c)
in which
R^{o} is hydrogen or chlorine,
R⁵ is hydrogen, alkyl having 1 to 4 carbon atoms or phenyl, which can be substituted,
R⁶ is hydrogen, alkyl having 1 to 4 carbon atoms or a group of the formula -(CH₂)ₙ-SO₂-Y, in which Y has one of the abovementioned meanings and n is the number 2 or 3, or is a group of the formula -(CH₂)ₙ-phenylene-SO₂-Y, where Y and n have the abovementioned meaning, or is a group of the formula -(CH₂)ₚ-B-(CH₂)_{q}-SO₂-Y, in which p and q, both independently of one another, are the number 2, 3 or 4, B is a radical of the formula -O- or -NH- and Y has one of the abovementioned meanings, and
R⁷ is a group of the formula -(CH₂)ₙ-SO₂-Y, in which Y has one of the abovementioned meanings and n is the number 2 or 3, or is a group of the formula -(CH₂)ₙ-phenylene-SO₂-Y, where Y and n have the abovementioned meaning;
R¹ is hydrogen, methyl, ethyl, methoxy or ethoxy;
R² is hydrogen, methyl, ethyl, methoxy or ethoxy;
R³ is hydrogen, methyl, ethyl, methoxy or ethoxy; and
R⁴ is hydrogen, methyl, ethyl, methoxy or ethoxy.

2. A dyestuff mixture as claimed in claim 1, in which R¹ and R³ independently of one another are each methoxy or hydrogen and R² and R⁴ are each hydrogen.

3. A dyestuff mixture as claimed in claim 1, in which R¹, R², R³ and R⁴ are each hydrogen.

4. A dyestuff mixture as claimed in at least one of claims 1 to 3, in which A is a radical of the formula (b) 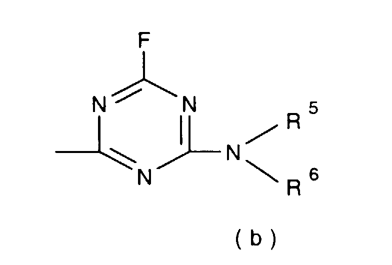 in which R⁵ is phenyl, which can be substituted by 1 or 2 substituents from the group consisting of sulfo, alkyl having 1 to 4 carbon atoms, alkoxy having 1 to 4 carbon atoms, carboxyl and halogen, and R⁶ has one of the meanings given in claim 1.

5. A dyestuff mixture as claimed in at least one of claims 1 to 4, in which R is hydrogen, alkyl having 1 to 4 carbon atoms, sulfo, carboxyl or chlorine and A is a radical of the formula (c) mentioned and defined in claim 1.

6. A dyestuff mixture as claimed in at least one of claims 1 to 5, in which the dyestuffs of the formulae (1), (2) and (3) are present in the mixture in a molar mixing ratio of 20 : 100 : 0.5 to 70 : 40 : 4.

7. A dyestuff mixture as claimed in at least one of claims 1 to 5, in which the dyestuffs of the formulae (1), (2) and (3) are present in the mixture in a molar mixing ratio of 35 : 80 : 2 to 55 : 55 : 1.

8. A dyestuff mixture as claimed in at least one of claims 1 to 7, in which Y is in each case independently of one another vinyl or β-sulfatoethyl.

9. A process for the preparation of a dyestuff mixture as claimed in claim 1, which comprises mixing the dyestuffs of the formulae (1), (2) and (3) with one another in the form of their dyestuff powders and/or aqueous solutions.

10. The use of a dyestuff mixture as claimed in at least one of claims 1 to 8 or of the dyestuffs (1), (2) and (3) of claim 1 together for dyeing fiber material containing hydroxyl and/or carboxamide groups.

11. A process for dyeing fiber material containing hydroxyl and/or carboxamide groups, in which dyestuffs are applied in dissolved form to the material and these are fixed on the material by means of heat or with the aid of an agent having an alkaline action or with the aid of both measures, which comprises employing a dyestuff mixture of at least one of claims 1 to 8 or dyestuffs (1), (2) and (3) of claim 1 together as dyestuffs.

## Revendications

1. Mélange de colorants contenant un ou plusieurs colorants formazane au cuivre de formule générale (1), un ou plusieurs colorants disazoïques de formule générale (2) et un ou deux colorants monoazoïques de formule (3) 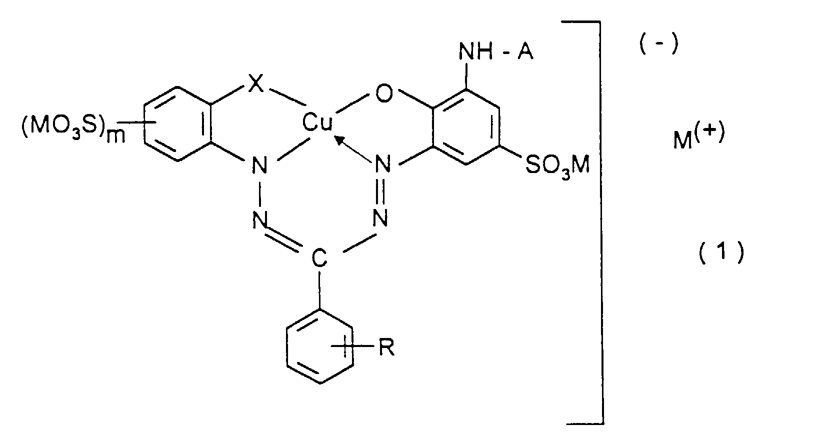 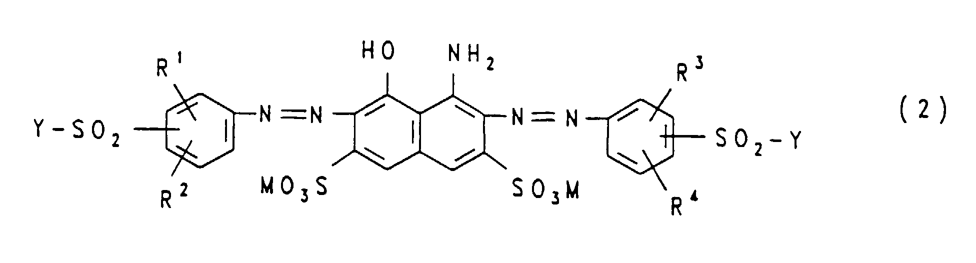 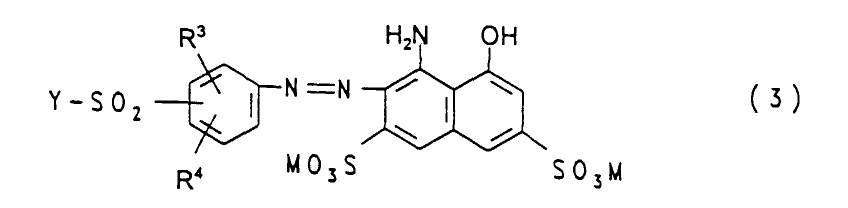 dans lesquelles :
M représente un hydrogène ou un métal alcalin ;
m représente le nombre zéro ou 1 ;
Y représente un vinyle, un β-chloroéthyle, un β-thiosulfatoéthyle ou un β-sulfatoéthyle ;
R représente un hydrogène, un alkyle ayant de 1 à 4 atomes de carbone, un sulfo, un carboxy ou un chlore ;
X représente un carbonyloxy de formule -CO-O- ou un oxy de formule -O- ou le groupe -SO₃⁽⁻⁾ ;
A représente un radical de formules générales (a), (b) ou (c) 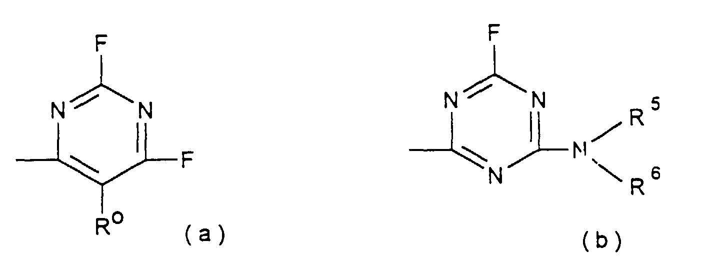
-CO-NH-R⁷ (c)
dans lesquelles
R⁰ représente un hydrogène ou un chlore,
R⁵ représente un hydrogène, un alkyle ayant de 1 à 4 atomes de carbone ou un phényle, qui peut être substitué,
R⁶ représente un hydrogène, un alkyle ayant de 1 à 4 atomes de carbone ou un groupe de formule générale -(CH₂)ₙ-SO₂-Y, dans laquelle Y a l'une des significations indiquées ci-dessus et n représente le nombre 2 ou 3, ou un groupe de formule générale -(CH-₂)ₙ-phénylène-SO₂-Y, où Y et n ont la signification susmentionnée, ou un groupe de formule générale -(CH₂)ₚ-B-(CH₂)₉-SO₂-Y, dans laquelle p et q, tous deux indépendamment l'un de l'autre, représentent le nombre 2, 3 ou 4, B représente un radical de formule -O- ou-NH- et Y a l'une des significations susmentionnées, et
R⁷ représente un groupe de formule générale -(CH₂)ₙ-SO₂-Y, dans laquelle Y a l'une des significations indiquées ci-dessus et n représente le nombre 2 ou 3, ou un groupe de formule générale-(CH₂)ₙ,-phénylène-SO₂-Y, où Y et n ont la signification susmentionnée ;
R¹ représente un hydrogène, un méthyle, un éthyle, un méthoxy ou un éthoxy ;
R² représente un hydrogène, un méthyle, un éthyle, un méthoxy ou un éthoxy ;
R³ représente un hydrogène, un méthyle, un éthyle, un méthoxy ou un éthoxy ;
R⁴ représente un hydrogène, un méthyle, un éthyle, un méthoxy ou un éthoxy.

2. Mélange de colorants selon la revendication 1, caractérisé en ce que R¹ et R³ représentent chacun, indépendamment l'un de l'autre, un méthoxy ou un hydrogène et R² et R⁴ représentent chacun un hydrogène.

3. Mélange de colorants selon la revendication 1, caractérisé en ce que R¹, R², R³ et R⁴ représentent chacun un hydrogène.

4. Mélange de colorants selon au moins l'une des revendications 1 à 3, caractérisé en ce que A représente un radical de formule générale (b) 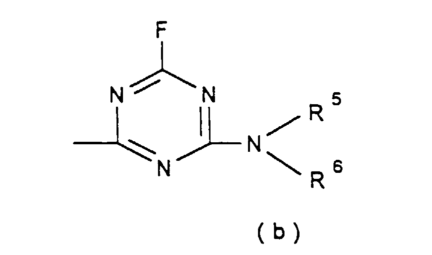 dans laquelle R⁵ représente un phényle pouvant être substitué par 1 ou 2 substituants parmi le groupe constitué d'un sulfo, d'un alkyle ayant de 1 à 4 atomes de carbone, d'un alcoxy ayant de 1 à 4 atomes de carbone, d'un carboxy et d'un halogène, et R⁶ a l'une des significations indiquées à la revendication 1.

5. Mélange de colorants selon au moins l'une des revendications 1 à 4, caractérisé en ce que R représente un hydrogène, un alkyle ayant de 1 à 4 atomes de carbone, un sulfo, un carboxy ou un chlore, et A représente un radical de formule générale (c) indiqué et défini à la revendication 1.

6. Mélange de colorants selon au moins l'une des revendications 1 à 5, caractérisé en ce que les colorants de formules générales (1), (2) et (3) sont présents dans le mélange en un rapport de mélange molaire de 20 : 100 : 0,5 à 70 : 40 : 4.

7. Mélange de colorants selon au moins l'une des revendications 1 à 5, caractérisé en ce que les colorants de formules générales (1), (2) et (3) sont présents dans le mélange en un rapport de mélange molaire de 35 : 80 : 2 à 55 : 55 : 1.

8. Mélange de colorants selon au moins l'une des revendications 1 à 7, caractérisé en ce que chaque Y représente indépendamment l'un de l'autre un vinyle ou un β-sulfatoéthyle.

9. Procédé de préparation d'un mélange de colorants selon la revendication 1, caractérisé en ce que les colorants de formules générales (1), (2) et (3) sont mélangés les uns avec les autres sous forme de leurs poudres de colorant et/ou solutions aqueuses.

10. Utilisation conjointe d'un mélange de colorants selon au moins l'une des revendications 1 à 8 ou des colorants (1), (2) et (3) selon la revendication 1 en vue de la teinture d'une matière fibreuse renfermant des groupes hydroxy et/ou carboxamide.

11. Procédé de teinture d'une matière fibreuse renfermant des groupes hydroxy et/ou carboxamide, dans lequel on applique des colorants sur la matière sous forme dissoute que l'on fixe sur la matière par la chaleur ou à l'aide d'un agent alcalin ou à l'aide des deux mesures, caractérisé en ce que l'on utilise conjointement, en tant que colorants, un mélange de colorants selon au moins l'une des revendications 1 à 8 ou des colorants (1), (2) et (3) selon la revendication 1.
